# EUROPEAN PATENT APPLICATION

(11) **EP 2 518 657 A1**
(43) Date of publication of application: **31.10.2012**
(21) Application number: 11305496.9
(22) Date of filing: 27.04.2011
(51) Int. Cl.: G06F 21/00

(54) **Method and system for communicating data to a contact-less communicating device**

(71) Applicant: Gemalto SA, 92190 Meudon (FR)
(72) Inventor: De la Hogue, Emmanuel, 83470 Saint Cyr sur Mer (FR); Schirar, Stéphane, 13720 La Bouilladisse (FR)

(57) **Abstract**

The invention relates to a method for (20) for communicating data to a contact-less communicating device (12).

According to the invention, the contact-less communicating device storing at least one identifier, the method comprises the following steps. The contact-less communicating device sends to a terminal (14) at least the identifier (22). The terminal sends to a server (110) at least the identifier (26). The server retrieves information allowing to write into the contact-less communicating device based upon at least the identifier. The server sends to the terminal the retrieved information (28). And the terminal sends to the contact-less communicating device a request for writing data (212), the request for writing data or data to be written using the retrieved information.

The invention also relates to a corresponding system.

## Description

### Field of the invention:

The invention relates, in a general manner, to a method for communicating data to a contact-less communicating device.

Within the present description, the adjective "contact-less" used within the expression "contact-less communicating device" means notably that the communicating device communicates via a short range radio-frequency link by using, for example, International Standardization Organization/ International Electrotechnical Commission (or ISO/IEC) 14 443 specifications or the like.

Furthermore, the invention also pertains to a system for communicating data to a contact-less communicating device.

### State of the art:

A first known solution for communicating data to a contact-less communicating device, such as a Radio Frequency IDentification (or RFID) tag, as a contact-less communicating device, is based upon a use of loading of data into the RFID tag during its manufacturing.

However, such a first known solution implies that each RFID tag has to be loaded with specific data which is very time consuming and therefore expensive. Moreover, the specific data has to be modified during the time so as to be up to date.

A second known solution for communicating data to an RFID tag is based upon a use of a Near Field Communication (or NFC) enabled terminal storing data, so as to write the data into the RFID tag.

However, such a second known solution requires that a person equipped with the NFC enabled terminal has to move to each geographical place where an RFID tag is present, so as to update data stored within each RFID tag.

Thus, there is a need to facilitate a communication of data to a contact-less communicating device.

### Summary of the invention:

The invention proposes a solution for satisfying the just hereinabove specified need by providing a method for communicating data to a contact-less communicating device.

According to the invention, the contact-less communicating device storing at least one identifier, the method comprises the following steps. The contact-less communicating device sends to a terminal at least the identifier. The terminal sends to a server at least the identifier. The server retrieves information allowing to write into the contact-less communicating device based upon at least the identifier. The server sends to the terminal the retrieved information and the terminal sends to the contact-less communicating device a request for writing data, the request for writing data or data to be written using the retrieved information.

The principle of the invention consists in using a terminal for fetching from, on the one hand, a contact-less (communicating) device an identifier, and, on the other hand, a server, thanks to the identifier, information allowing to write into the contact-less device, and delivering information to the contact-less device, so as to update this latter.

The invention solution makes it possible to write data into the contact-less device after a reading of an identifier stored within the contact-less device.

The invention solution allows a communication of data to be written into a contact-less device from a user terminal after having submitted to a server an identifier stored within the contact-less device.

A writing of data from a mere (user) terminal into a contact-less device is thus carried out after a reading of an identifier by the terminal.

Accordingly, contrary to the second known solution that is described supra, the proposed solution does not require an intervention of a person dedicated to accessing a geographical location where a contact-less device is, so as to write data into the contact-less device among a fleet of contact-less devices.

It is to be noted that data to be written into the contact-less device may relate to any kind of data.

According to a further aspect, the invention is a system for communicating data to a contact-less communicating device.

The contact-less communicating device comprises means for storing at least a first identifier.

According to the invention, the system comprises a terminal and at least one server. The server comprises means for retrieving information allowing to write into the contact-less communicating device based upon the identifier and means for sending to the terminal the retrieved information. And the terminal comprises means for receiving from the contact-less communicating device, at least the identifier, means for sending to the server at least the identifier, and means for sending to the contact-less communicating device a request for writing data, the request for writing data or data to be written using the retrieved information.

A mere user terminal may be used at a location where a contact-less device is situated and at any time, so as to write, in an easy, simple and quick manner, data into the concerned contact-less device.

The use of one and the same terminal allows reading, from a contact-less device, an identifier that may be related to a product or a service and getting from a server connected to the terminal information, and writing data into the contact-less device thanks to the get information.

As to the terminal, it may be any kind of terminal that is able to communicate with, on the one hand, a contact-less device, and, on the other hand, a server supplying information to be communicated to the contact-less device.

The terminal may be, for example, a mobile handset, a mobile telephone, a smart telephone, a Personal Digital Assistant (or PDA), an audio player, a video player, a media player, a game player, a portable Personal Computer (or PC), a laptop, a portable TeleVision (or TV) set, a tablet computer and/or a netbook.

### Brief description of the drawings:

Additional features and advantages of the invention will be more clearly understandable after reading a detailed description of one preferred embodiment of the invention, given as one indicative and non-limitative example, in conjunction with the following drawings:

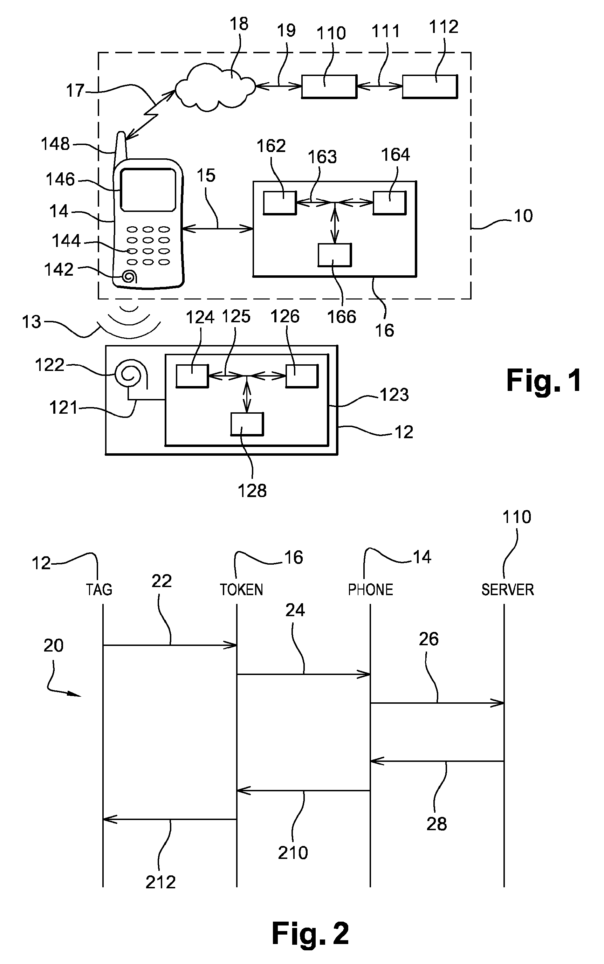

- Figure 1 represents a simplified diagram of one exemplary embodiment of a system for communicating data to an RFID tag, as a contact-less device, with an NFC enabled mobile telephone, as a user terminal, a token coupled to the terminal, and a server connected to the terminal, the system being adapted to write data into the RFID tag, according to the invention; and
- Figure 2 illustrates a simplified message flow of one exemplary embodiment of a method implemented notably by the different entities of the system of figure 1, so that the token writes data into the RFID tag after the token has read an identifier originating from the RFID tag and has collected information from the server based upon the identifier.

### Detailed description:

Herein under is considered a case in which the invention method for communicating data to a contact-less device is implemented by, among others, a smart card, as a token, in cooperation with an NFC enabled mobile terminal and an NFC chip connected to an antenna under a token control.

However, the invention method for communicating data to a contact-less communicating device may be implemented by an NFC enabled mobile terminal and an NFC chip connected to an antenna under a terminal control. In other words, the NFC enabled mobile terminal does not cooperate with any token (apart from the NFC chip). According to such an embodiment (not represented), the NFC enabled mobile terminal is adapted, so as to exert the functions carried out by the token and the terminal and herein after described.

Figure 1 shows one embodiment of an electronic system 10 for communicating data to an RFID object or tag 12, as a contact-less communicating device.

The system 10 for communicating data includes an NFC enabled mobile telephone 14, a Subscriber Identity Module (or SIM) type smart card 16 and a so-termed Over-The-Air (or OTA) server 110.

For a sake of clarity and conciseness, the RFID tag 12, the NFC enabled mobile telephone 14, the SIM type smart card 16 and the OTA server 110 are termed herein after the tag 12, the phone 14, the token 16 and the server 110 respectively.

According to a preferred embodiment, the tag 12 constitutes a standalone tag 12. The tag 12 is preferably not connected to any communication network.

The tag 12 is stuck or fixed on a TV set (not represented), as a device or product, or any other physical element (not represented) connected to or not to the TV set and located close to the TV set.

The tag 12 may be located near to or on a medium on which information relating to an access to a service is published. The medium, such as a bus shelter element, publishes information accessible by any device user that is present in front of the medium.

The tag 12 is linked to a physical element (not represented) incorporated within or linked to a device with which the tag 12 is associated.

The tag 12 is present at a geographical location from which a service may be requested.

The service may be any type of service to which an access is offered from a particular place, like an airport, a hotel, a bus station, a train station, a state office or a hospital.

The tag 12 comprises, as components, at least one antenna 122 and at least one integrated circuit or chip 123 for receiving and transmitting a signal originating from either outside or the chip 123 respectively.

The tag 12 may further comprise a battery (not represented) for supplying power to the tag components.

The tag 12 is preferably provided with power through a radio-frequency signal to be received from an external entity, as an NFC reader.

The tag antenna 122 is connected, through a wire bi-directional link 121, to the chip 123.

The tag antenna 122 is configured to receive data from and send data to outside, through a short range radiofrequency link 13.

The short range radiofrequency may be fixed at, for example, 13.56 MHz.

The tag chip 123 comprises preferably one or several microprocessors 124, as means for processing data, at least one memory 126, at least one Input/Output (or I/O) interface 128, all linked together through a control and data bus 125.

As data processing type(s), it includes notably a modulation of a signal to be transmitted, through the tag antenna 122, to an external entity(ies) and a demodulation of a signal to be received, through the tag antenna 122, from an external entity.

Instead of being constituted by a microprocessor(s), the means for processing data comprises, at least in part, a logic circuitry. Such a logic circuitry may comprise one or several logic gate(s), such as a OR gate(s), a NOR gate(s), a AND gate(s), a NAND gate(s) and/or other logic component(s)...

The tag memory 126 is preferably of the non-volatile type. The tag memory 126 may include one or several memories of the volatile type.

The tag memory 126 stores data.

At least some of the stored data is to be read from an outer entity, such as the token 16 and/or the phone 14, as an NFC reader.

The stored data comprises data relating to an identifier(s).

The stored identifier(s) may be unique or include a plurality of identifiers.

The stored identifier allows identifying either a device or product (not represented) with which the tag 12 is associated, or a service to which a token user (and/or a terminal user) may access.

The stored identifier may include information relating to a serial number of a product, a version number of an application (or software) supported by a product, and/or a date of manufacturing of a product with which the tag 12 is associated.

The stored identifier may contain a Uniform Resource Locator(s) (or URL) of a server, a call phone number of a server, a video-conference call phone number of a server, a Unstructured Supplementary Service Data (or USSD) type session data, a Short Message Service (or SMS) type phone number of a server, a Multimedia Messaging Service (or MMS) type phone number of a server, and/or an email address relating to a manufacturer of the product or a service provider.

The stored identifier may comprise vCard data, event data and/or note data.

As data stored within the tag memory 126, there may be a date and/or a time at which a service is allowed to be accessed, a time period during which the user accesses the service, an identifier of an application embedded within the token 16 (or the phone 14) and to be addressed, a service identifier, an identifier of a service provider and/or other information.

The tag 12 is arranged so as to be updatable, through a contact-less channel, i.e. via the short range radiofrequency link 13. In other words, the tag memory 126 may be written with modified data and/or other data originating from an outer entity, such as the token 16 (and/or the phone 14), as an NFC reader.

The update of data may relate to information relating to a service. The information relating to a service may include a URL of a server, a call phone number of a server, a video-conference call phone number of a server, a USSD type session data, a SMS type phone number of a server, a MMS type phone number of a server, and/or an email address of a server relating to a service provider.

The update of data may relate to information relating to a person, namely an owner of the token 16, as user of the phone 14. Thus, the owner of the token 16 may introduce personal data into the tag memory 126, so that the tag 12 registers data relating to a person that owns the device with which the tag 12 is associated.

The tag chip 123 is preferably arranged to protect an access to the tag memory 126 for its writing and authorize an access only to an external entity(ies) that supplies(supply) the tag chip 123 with rights for writing data, i.e. only known to the external entity, such as the token 16 (or the phone 14), and the tag 12.

The rights for writing data into the tag memory 126 may be a code number or the like.

The tag memory 126 stores secret data, as rights for writing data into the tag memory 126.

The tag memory 126 may store data relating to a private key relating to the tag 12, data relating to a public key associated with the private key, and/or data relating to a shared key relating to an external entity, such as a server.

The public key relating to the tag 12 may be shared, possibly through a server like the server 110 or another server (not represented) connected to the server 110, between the tag 12 and at least another external entity(ies), such as the token 16 (and/or the phone 14). The external entity is thus able to exchange data, in an encrypted manner, with the tag 12. The public key relating to the tag 12 may be used by at least one external entity for encrypting, with a predetermined encryption algorithm, information to be notably written into the tag 12.

The tag chip 123 may be arranged to decrypt data received from the external entity, such as the token 16 (or the phone 14), by using a predetermined decryption algorithm stored within the tag memory 126 and the private key relating to the tag 12.

The tag microprocessor 124 executes preferably an application algorithm, as a process for verifying rights of writing data into the tag memory 126.

The tag memory 126 stores the application algorithm.

The tag chip 123 is able to verify, before authorizing to write information into its memory 126, that submitted rights for writing data into its memory 126 correspond to the expected (stored) ones. Otherwise, i.e. when assumed rights for writing data into the tag memory 126 received from a tag 12 interlocutory do not correspond to the expected ones, the tag chip 123 forbids to write into its memory 126 information received from its interlocutory.

As to the phone 14, it may be any device including means for processing data, comprising or being connected to a first antenna 142 for sending to and/or receiving data from outside, through a short range radio-frequency link 13, comprising or being connected to means for interfacing with a user, as Man Machine Interface (or MMI), like a keyboard 144, a loudspeaker (not represented) and/or a display screen 146, comprising or being connected to means for storing data, and comprising or being connected to a second antenna 148 for sending to and/or receiving data from outside, through a long range radio-frequency link 17.

The phone 14 includes at least one battery (not represented), at least one microprocessor (not represented), at least one memory (not represented) and at least one I/O interface.

The phone memory stores data, like user data, and at least one application.

As application(s), there is preferably at least one menu or a Web browser, as user interface for accessing at least one target application supported by the token 16. The application allows exchanging data between the tag 12, the token 16, the server 110, and possibly, through the phone MMI, the phone user, in order to write data into the tag 12.

The phone microprocessor processes data originating from either the phone memory or an external entity.

The phone microprocessor executes at least one application, so as to interact with the target application(s) supported by the token 16 and offered to the card user.

The first antenna 142 allows to exchange, via an NFC chip (not represented) connected to the first antenna 152, data, through the bi-directional link 13, with an external entity(ies).

The NFC chip is connected either directly or, through a phone I/O interface, to the token 16.

The phone 14 is used at least in a reader mode to let communicate, through the NFC chip, the token 16 and the tag 12.

The NFC chip is powered by the phone battery and transmits, through the first antenna 142, a signal, so as to also power the tag 12.

The NFC chip plays a role of a modulator-demodulator (or modem) for the token 16 (and/or the phone 14), i.e. a device that:
- demodulates a received analogical carrier signal to decode encoded digital information that is received, over the first antenna 142, from an outer entity, such as the tag 12, and
- modulates an analogical carrier signal to encode digital information received from the token 16 to be transmitted, over the first antenna 142, to an outer entity, such as the tag 12.

The phone 14 comprises a second antenna 148 for exchanging data, through a long range radio-frequency link 17, with a mobile radio-communication network 18.

The mobile radio-communication network 18 may be constituted by a Global Service for Mobiles (or GSM), a Universal Mobile Telecommunications System (or UMTS), a Code Division Multiple Access (or CDMA) and/or a Long Term Evolution (or LTE) type network(s).

The mobile radio-communication network list that is just herein above indicated is not exhaustive but only for exemplifying purposes.

The phone I/O interface includes, among others, an I/O interface, so as to exchange data with the token 16. The interface with the token 16 may be an International Standard Organization (or ISO) 7816 interface, as a contact interface when the token 16 is accommodated within a phone 14 housing.

The phone 14 is connected, through a bi-directional contact or contact-less link 15, to the token 16.

The token 16 belongs to a user, namely the phone user, as terminal user.

The token 16 is a smart object that is intended to communicate with the outside world. The token 16 is any electronic medium that may have different form factors.

For example, instead of a Subscriber Identity Module (or SIM) type smart card, such as a Universal Integrated Circuit Card (or UICC), the token can be embodied within a Secure Digital (or SD) type card, a Multi-Media type Card (or MMC), a smart dongle of the USB (acronym for "Universal Serial Bus") type, or a chip to be fixed to a user terminal, as host device, possibly in a removable manner.

The token 16 comprises a chip.

The token chip preferably includes at least one microprocessor 162, as data processing means, at least one memory 164 and at least one I/O interface 166 which are internally linked together through a data and control bus 163.

The token 16 may include an ISO 7816 interface, so as to let communicate, through the contact link 15, the token 16 and the phone 14. The communication between the token 16 and the phone 14 is used in particular to benefit from the MMI of the phone 14.

The token user may have subscribed to a service(s) managed by the token 16 and related notably to the target application supported by the token 16, as an intermediary entity for accessing the server 110.

An execution of the target application may be triggered either automatically by an identifier stored within the tag memory 126 and/or a user selection of the target application within either a menu, like a Sim ToolKit (or STK) menu, or a server that is embedded within the token 16. The embedded menu or the server lists a part of or all the applications supported by the token 16.

The token microprocessor 162 is able to initiate actions, in order to interact directly with the outside world, in an independent manner of the phone 14. Such a capacity of interaction at the initiative of the token 16 is also known as proactive capacity. The token 16 is thus enable to send, at its own initiative, to the phone 14 a proactive command, also known as "Display text", for displaying, through the phone display screen 146, some message and/or another command for requesting a user input, through the phone 14 MMI.

The token microprocessor 162 preferably executes security functions, in order to protect an access to user information stored and managed through or by the token 16.

The security functions include preferably a user authentication process to be used before accessing executable and non-executable data stored within the token memory 164.

To authenticate the user, the token 16 may store an application for verifying data, such as a Personal Identity Number (or PIN) and/or a biometric print(s) (like a fingerprint(s), a facial print(s) and/or a iris print(s)), securely stored within the token memory 164 and to be input by the token user.

Thus, the token 16 is able to compare data input by the token user with stored data and authorize, when successfully verified, a running of the target application.

The security functions include preferentially an encryption/decryption process to be used before sending data, so as to protect an access to data exchanged between the token 16 and the tag 12 and/or the token 16 and the server 110.

Preferably, the token 16 stores securely, within its memory 164, an International Mobile Subscriber Identity (or IMSI), as a unique number associated with all GSM, UMTS, CDMA and/or LTE type network(s) phone users.

The IMSI is used for identifying the token user as a subscriber in relation to one or several mobile radio-communication networks.

To identify the token user, the token memory 164 may store, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks and/or an Internet protocol multimedia Services Identity Module (or ISIM) for IP Multimedia Subsystem (or IMS).

The token memory 164 stores data relating to the concerned user, as user data.

The user data may include a first name, a last name, a birth date, a personal picture, a user identifier, a mail address of the user, a telephone number of the user, an email address of the user, a Session Initiation Protocol address of the user, a telecopy number of the user, a key Ki associated with the user identifier, like the IMSI, a PIN, a biometrics print(s) and/or other appropriate data.

The key Ki is shared with the server 110. The key Ki may be used as an encryption key for encrypting data to be sent to the server 110 with a predetermined encryption algorithm.

At least some of the data items, like predetermined user data and/or data relating to an access to one or several services, stored within the token memory 164 may be used for being transmitted to the tag 12 and written into the tag memory 126.

The token memory 164 comprises data relating to a target application algorithm allowing, when executed, reading an identifier to be fetched from the tag 12, submitting the identifier to the server 110 (or a server connected to the server 110 after a redirection from the server 110 to the connected server), fetching, when possibly the concerned user is eligible to such a service, information from the server 110 (or the server connected to the server 110) based upon the submitted identifier and sending data to be written into the tag 12 thanks to the fetched information originating from the server 110.

If there is data that is not stored within the token memory 164 and to be informed, then the application algorithm allows, when executed, requesting, through the phone MMI, lacking data from the token user. The information given by the token user is thus communicated to the server 110 (or a server connected to the server 110) and/or the tag 12.

The application algorithm allows, when executed, storing within the token memory 164 information, such as one identifier, read from the tag 12 and further information fetched from the server 110 (or a server connected to the server 110).

The application algorithm allows, when executed, sending, through the phone 14, to the server 110, at least one identifier and possibly other information read from the tag 12 completed by other information, like a user identifier and/or a server identifier to be addressed, stored within the token memory 164.

The further information fetched from the server 110 may contain a code number or the like, as rights for writing data into the tag memory 126, or data allowing to retrieve rights for writing data into the tag memory 126, such as information of a particular line number and/or a particular column number of a table comprising data as rights for writing data into the tag memory 126.

The server 110 to be addressed is identified either within the data retrieved from the tag 12 or by data stored within the token memory 164.

The server 110, as addressee of the information fetched from the tag 12, may be identified by a Uniform Resource Identifier (or URI), like an URL, as server identifier.

The server 110 is connected, through a bi-directional wire link 19, to a mobile radio-communication network 18 preferably operated by a person under a control of a service provider.

The server 110 is connected, through a bi-directional contact or contact-less link 111, to a memory 112 storing a database.

The server 110 is hosted by a computer and is dedicated to running an application for managing the database and communicating some information of the database to outside.

The database contains a plurality of tag identifiers.

The database may associate each identifier, such as a serial number, originating from a tag with other data relating to the concerned tag 12, like in particular data as rights for writing into the tag 12 or data allowing the token 16 to retrieve data as rights for writing into the tag 12.

The rights for writing into the tag 12 are known to the tag 12 and have to be also known to an interlocutory of the tag 12, so as to be allowed to write received data into the tag memory 126.

The server 110 is preferably able to associate with each tag identifier other data relating to a user(s) who has addressed the concerned tag, so as to allow the user(s), as tag interlocutory, to access a service from and/or registering data into the concerned tag.

The server 110 (or another server connected to the server 110) manages the database.

The server 110 may be operated by either a mobile radio-communication network operator or on its behalf, a bank operator and/or a service provider or on its behalf. As service provider, it may also be a company, as a transport operator, that manages a transport service, like a bus, a train, a plane and/or a loyalty service.

The server 110 (or another server connected to the server 110) is able to decrypt encrypted data received from the token 16 (and/or the phone 14) by using a decryption key depending on the shared key Ki and a predetermined decryption algorithm.

The server 110 is arranged to analyze whether each user, thanks to a corresponding identifier, like an IMSI, that is received from the token 16 (and/or the phone 14) does authorize or does not authorize the requesting user to access the managed service and/or register data into the concerned tag.

Rules for accessing the database is accessible from the server 110.

The rules for accessing the service may encompass a user profile(s) that is(are) eligible for accessing the service, such as a predetermined minimum age, a predefined gender and/or other kind of access condition(s).

The rules for accessing the service are taken into account so as to forbid or authorize an access to the concerned service.

Figure 2 depicts an example of a message flow 20 that involves the tag 12, the token 16, as the tag interlocutory, the phone 14 and the server 110, as the server managing the database comprising information stored within the tag 12.

Firstly, the token user accesses, through the phone display screen 146, a target application supported by the token 16, so as to personalize the tag 12, i.e. to write personal data into the tag memory 146.

Optionally, before executing the target application managed by the token 16, the token 16 checks whether the phone user is the true user. To authenticate the token user, the token 16 verifies that data, such as a PIN, entered by the user matches expected data stored within the token memory 164.

If the token 16 has successfully authenticated the token user, then the token 16 triggers an execution of the selected target application. Otherwise, i.e. if the token user is not authenticated by the token 16, then the token 16 forbids to run the target application.

The token user carrying the phone 14 approaches the tag 12, so as to power the tag 12 and read the tag 12.

The token 16 sends, via the NFC chip (not represented), to the tag 12 a request (not represented) for reading data stored within the tag memory 126.

The tag 12 sends, via the NFC chip, to the requesting token 16, as tag interlocutory, at least one identifier 22.

The token 16 may encrypt the received data, i.e at least the identifier, by using an encryption key, such as the key Ki, shared with the server 110 and stored within the token memory 164.

The token 16 transmits to the phone 14 a request 24 for sending to an identified server 110 the read identifier and preferably an IMSI, as a user identifier, accompanied with possibly a request for obtaining information.

Once received, the phone 14 sends, through the mobile communication network 18, to the identified server 110, a message 26, such as an SMS message, including the read identifier and preferably an IMSI, as a user identifier, possibly accompanied with the request for obtaining information.

When applicable, i.e. if at least some received data is encrypted, the server 110 decrypts the received encrypted data, i.e at least the encrypted identifier, by using a decryption key based upon the shared key Ki and stored within the memory 112 that is accessible to the server 110.

Once the server 110 has recognized the registered identifier originating from the tag 12, the server 110 analyses whether or not the identified user is eligible to access a requested service accessible from the tag 12 and/or write data into the tag 12.

If the identified user is eligible, the server 110 may register the identified user by saving a user identifier, like an IMSI, in association with the received identifier originating from the tag 12. The server 110 retrieves within the database which stores information relating to the identifier, such as rights for writing data into the tag 12 or information allowing the token 16 to identify which rights for writing data into the tag 12 is to be used, is associated with the received identifier. The server 110 collects the retrieved information associated with the received identifier based upon the received identifier.

If the identified user is not eligible, then the server 110 informs preferably the token user that she or he is not authorized to access the requested service accessible from the tag 12 and/or write data into the tag 12.

The server 110 may encrypt the retrieved information, such as rights for writing data into the tag 12 or information allowing the token 16 to identify which rights for writing data into the tag 12 is to be used, associated with the received identifier by using an encryption key, like the key Ki shared with the token 16, and a predetermined encryption algorithm accessible to the server 110.

The server 110 sends back to the phone 14 a message 28, such as an SMS message, including the retrieved information 28 associated with the received identifier.

The phone 14 forwards to the token 16 the received retrieved information 210 that is possibly encrypted.

When applicable, i.e. if at least some received data is encrypted, the token 16 decrypts the received encrypted data, i.e at least the encrypted retrieved information, by using a decryption key, such as the shared key Ki, stored within the token memory 164.

The token 16 establishes, as data to be sent to the tag 12, a request for writing data into the tag 12 and/or data stored within the token memory 164 and to be written into the tag 12 by using the retrieved information.

According to an embodiment, the token 16 extracts from the retrieved information a code number, as rights for writing data into the tag 12 and puts the code number before the request for writing data into the tag 12.

According to anothe embodiment, the token 16 finds based upon the retrieved information rights for writing data into the tag 12 and puts them before the request for writing data into the tag 12.

The token 16 sends to the tag 12 data 212 including a request for writing data into the tag 12 accompanied with data stored within the token memory 164, as data to be written into the tag memory 126, and preferably rights for writing data into the tag 12.

The tag 12 verifies that the received assumed rights for writing data into the tag 12 are the ones stored within the tag memory 126.

If the received assumed rights for writing data into the tag 12 are the ones stored within the tag memory 126, then the tag 12 writes into the tag memory 126 the data to be written into the tag 12.

Otherwise, i.e. if the received assumed rights for writing data into the tag 12 are not the ones stored within the tag memory 126, then the tag 12 does not allow to write into the tag memory 126 any data originating from its interlocutory.

The use of the invention system 10 allows her or him to write, for example, personal data into the tag memory 126, so as to mark a product with which the tag 12 is associated.

A user needs to carry a mere device or a system able to communicate, on the one hand, in a contact-less manner with the tag 12 and, on the other hand, with a server in an easy and convenient for the token user.

## Claims

1. A method (20) for communicating data to a contact-less communicating device (12),
**characterized in that**, the contact-less communicating device storing at least one identifier, the method comprises the following steps:
- the contact-less communicating device sends to a terminal (14) at least the identifier (22);
- the terminal sends to a server (110) at least the identifier (26);
- the server retrieves information allowing to write into the contact-less communicating device based upon at least the identifier;
- the server sends to the terminal the retrieved information (28); and
- the terminal sends to the contact-less communicating device a request for writing data (212), the request for writing data or data to be written using the retrieved information.

2. Method according to claim 1, wherein the server sends to the terminal rights for writing data into the contact-less communicating device, the terminal sends to the contact-less communicating device the rights for writing data into the contact-less communicating device and the contact-less communicating device verifies that the received rights for writing data into the contact-less communicating device are the expected ones before the contact-less communicating device writes into a memory the received data.

3. Method according to claim 1 or 2, wherein, prior to a sending of at least the identifier from the terminal to the server, the terminal encrypts the identifier by using a key stored within or accessible to the terminal.

4. Method according to any of claims 1 to 3, wherein, prior to a sending of a request for reading at least the identifier from the terminal to the contact-less communicating device, the terminal authenticates a terminal user.

5. Method according to any of the claims 1 to 4, wherein, prior to a sending of at least the identifier from the terminal to the server, the terminal encrypts at least the identifier by using an encryption key stored within or accessible to the terminal, and
wherein the server, as a first server, or another server, as a second server, connected to the first server decrypts at least the encrypted identifier by using a decryption key shared between the first or second server and the terminal.

6. Method according to any of the claims 1 to 5, wherein the terminal stores predetermined data relating to a terminal user and/or predetermined data relating to an access to at least one service, as data to be written into the contact-less communicating device memory.

7. Method according to claim 6, wherein the predetermined data relating to the terminal user includes at least one item of the following information:
- a user identifier;
- a mail address of the user;
- a telephone number of the user;
- an email address of the user;
- a Session Initiation Protocol address of the user; and/or
- a telecopy number of the user.

8. A system (10) for communicating data to a contact-less communicating device (12), the contact-less communicating device comprising means (126) for storing at least one identifier,
**characterized in that** the system comprises a terminal (14) and at least one server (110) and **in that**:
- the server comprises means for retrieving information allowing to write into the contact-less communicating device based upon the identifier and means for sending to the terminal the retrieved information; and
- the terminal comprises means for receiving from the contact-less communicating device, at least the identifier, means for sending to the server at least the identifier, and means for sending to the contact-less communicating device a request for writing data, the request for writing data or data to be written using the retrieved information.

9. System according to claim 8, wherein the terminal includes a Near Field Communication enabled mobile handset.

10. System according to claim 8 or 9, wherein, the terminal being coupled to a token (16), the system further comprises the token.
